# DEMANDE DE BREVET EUROPEEN

(11) **EP 2 281 655 A1**
(43) Date de publication de la demande: **09.02.2011**
(21) Numéro de dépôt: 09176474.6
(22) Date de dépôt: 19.11.2009
(51) Int. Cl.: B23K 26/14, B23K 26/20, B23K 26/38, B23K 26/42, G01B 11/27

(54) **Dispositif d'aide au centrage d'une buse de confinement de gaz par rapport à l'axe optique d'un faisceau laser**

(30) Priorité: 03.08.2009 EP 09290604
(71) Demandeur: Siemens VAI Metals Technologies SAS, 42403 Saint Chamond (FR)
(72) Inventeur: Michelet, Guy, 75014 Paris (FR); Fezard, Dominique, 28160 Yèvres (FR)
(74) Mandataire: Fischer, Michael

(57) **Abrégé**

La présente invention concerne, un dispositif permettant de centrer une buse (5) de confinement de gaz par rapport à l'axe optique (3) appartenant à un faisceau laser (2), faisceau utilisé pour découper, percer et souder; ce dispositif permet d'obtenir, un réglage dont la précision finale est indépendante de la perception visuelle que peut en avoir tout Opérateur.
Dans l'exécution d'une découpe ou d'un perçage en utilisant un faisceau laser (2), la précision de centrage de la buse (5), par rapport à l'axe optique du faisceau laser (3), est de première importance sur le résultat obtenu.

## Description

La présente invention concerne, un dispositif permettant de centrer une buse de confinement de gaz par rapport à l'axe optique appartenant à un faisceau laser, faisceau utilisé pour découper, percer et souder; ce dispositif permet d'obtenir, un réglage dont la précision finale est indépendante de la perception visuelle que peut en avoir tout Opérateur.

Dans l'exécution d'une découpe ou d'un perçage en utilisant un faisceau laser, la précision de centrage de la buse, par rapport à l'axe optique du faisceau laser, est de première importance sur la qualité de découpe et/ou de perçage (pour le soudage cela reste vral que dans 30 % des cas).

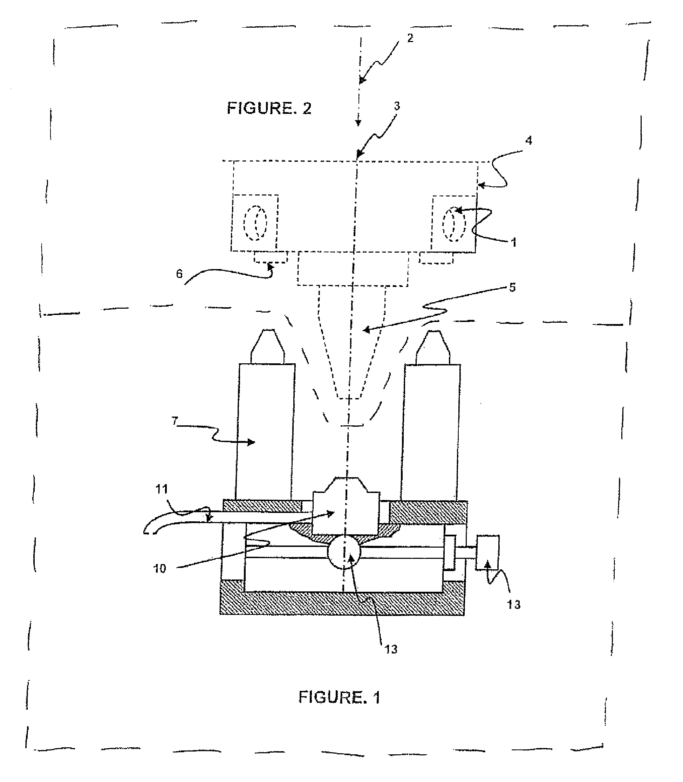

En effet, lorsqu'une buse a son axe (3) Figure.1 qui n'est pas parfaitement confondu avec l'axe optique (2) Figure.1 du faisceau laser, à la sortie de la découpe on observe qu'une partie de la matière, qui aurait due être vaporisée, s'est condensée sur les bords; la découpe ou/& le perçage présentent alors des bavures généralement appelées scories.

Pour qu'une buse puisse être centrée par rapport à l'axe optique du faisceau laser, la tête de perçage, de découpe ou de soudage possède des vis (1) Figure 1, qui translatent, la buse ou son support, orthogonalement à l'axe optique du faisceau (2) Figure (1).

Jusqu'à présent, J'Opérateur n'avait que deux possibilités approximatives qui étaient les suivantes :
- première possibilité, effectuer successivement des essais sur une pièce et estimer à l'oeil le meilleur résultat. On comprend très vite, que cette procédure est temporellement incertaine et donc, difficilement conciliable avec un contexte industriel de production,
- deuxième possibilité, coller un petit papier en sortie de la buse et effectuer un tir à basse puissance. Ensuite, estimer à l'oeil, la précision du centrage; puis recommencer un grand nombre de fois jusqu'à obtenir un réglage approximatif acceptable. Il est manifestement évident, que la notion de précision est très incertaine et aléatoire et donc incompatible avec un contexte industriel de production.

La présente invention permet :
- d'obtenir le bon centrage de la buse en une seule manipulation,
- d'avoir facilement une grande précision de centrage qui est indépendante d'une quelconque estimation de l'Opérateur.

A titre d'information et pour la compréhension du Lecteur, la Figure.2 schématise, en traits fins et discontinus, une tête de découpe, de perçage ou de soudage. Décrivons brièvement cette tête FIGURE.2:
- un corps (4),
- une buse (5),
- des vis (1) de centrage de la buse,
- des zones d'appuis (6) réservées à la réception du dispositif suivant l'invention,
- l'axe optique (2) du faisceau laser incident,
- l'axe mécanique (3) de la buse (5).

A titre d'exemple, la Figure. 1 présente en traits forts et continus le dispositif suivant l'invention.

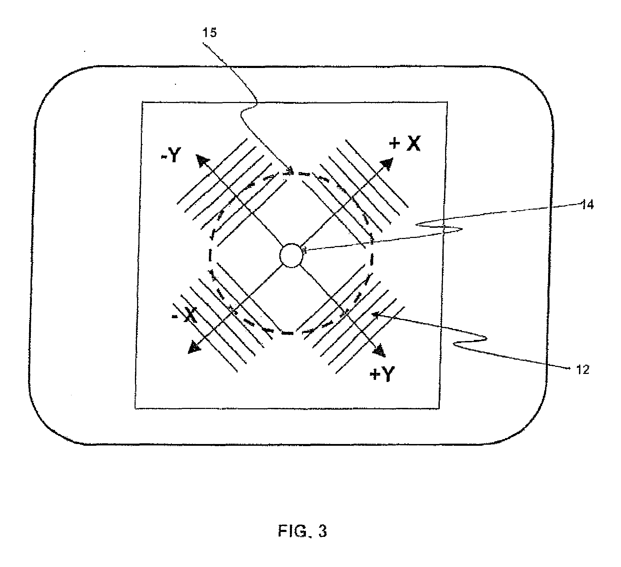

Toujours à titre d'exemple, la Figure.3 présente un afficheur qui est associé au dispositif suivant l'invention et qui permet de visualiser le centrage de la buse.

### Fonctionnement et procédure de réglage du centrage d'une buse

L'Opérateur prend en main le dispositif Figure.1 suivant l'invention, et le place en le fixant sous la tête de percage, découpe ou soudage que nous appellerons tête optique par la suite, de façon que les appuis de références (7) Figure.1 prennent place sur les zones d'appuis (6) Figure.2 de la tête optique.

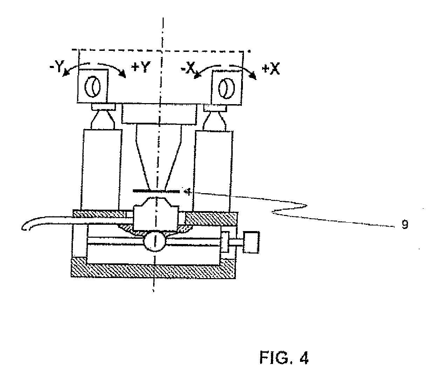

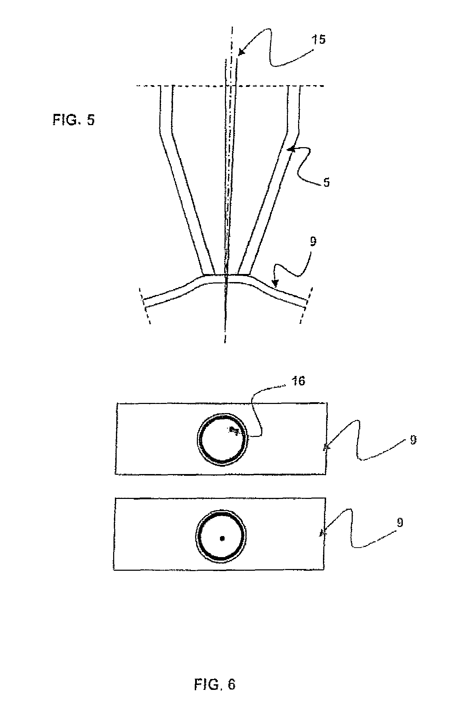

Le dispositif suivant l'invention Figure.1, lorsqu'il est en place sous la tête optique comme le montre la Figure.4, offre la particularité dans une de ses variantes, que l'ensemble hachuré (8) Figure.1 peut être escamoté, afin de libérer le passage dans l'axe optique du faisceau laser pour effectuer un tir laser sans rien détériorer. A partir de cette situation, l'Opérateur vient placer un petit écran sur l'extrémité de la buse Figure.5. A titre d'exemple et de façon non limitative, l'écran peut être un petit morceau de papier adhésif; ainsi, l'écran reste en place et peut être retiré très facilement le moment venu.

A ce moment de la procédure, l'Opérateur effectue un tir laser (15) Figure.5 avec une puissance et une durée du tir qui soient compatibles avec la réaction de l'écran (9) Figure.4 & Figure.5 afin que l'impact (16) Figure.5 du tir laser laissé dans l'écran (9) Figure.6 soit correct.

Ensuite, l'Opérateur agit sur le boîtier hachuré (8) Figure.1 pour qu'i! reprenne la place qu'il avait précédemment avant d'avoir été escamoté.

Le détecteur (10) Figure.1 se retrouve alors face à l'écran (9). Dans cette situation, l'impact, laissé par le tir laser précédent, se trouve dans le champ d'observation du détecteur (10) Figure.1. Ce détecteur (10) Figure.1, à titre d'exemple dans une variante, est relié par un câble électrique (11) Figue.1 à l'afficheur Figure.3 qui à titre d'exemples peut être un moniteur ou un écran de télévision. Dans cet afficheur, on observe une mire fixe (12) Figure.3 et indépendante de l'image de l'impact transmise par le détecteur (10) Figure.1.

Le détecteur (10) Figure.1 est fixé à un ensemble mécanique (13) Figure.1 qui permet de le centrer, sur l'axe optique (3) Figure.2 du faisceau laser en observant l'afficheur Figure.3 et par voie de conséquence sur le centre de l'impact laissé dans l'écran (9) Figure.4 et (14) Figure.3.

Maintenant, l'Opérateur retire le petit écran (9) Figure.3 de l'extrémité de la buse et il observe dans l'écran de télévision la nouvelle image donnée par le détecteur, qui est le trou de la buse par lequel le faisceau laser sort.

En agissant sur les vis de centrage (1) Figure.2, l'Opérateur centre le trou de la buse dans la mire.

Le réglage est alors terminé, l'Opérateur retire de la tête optique le dispositif suivant l'invention.

A titre uniquement indicatif, cette procédure prend environ trois minutes et offre une précision de centrage de 0,01 mm avec une grande facilité.

Une autre variante consiste à ne pas avoir le bloc (8) Figure.1 qui soit escamotable. Dans ce cas, avant de fixer sur la tête optique le dispositif suivant l"invention Figure.1, l'Opérateur place l'écran (9) Figure.4, effectue le tir laser puis, seulement à ce moment là, il fixe sur la tête optique le dispositif suivant l'invention.

Une autre variante consiste à ne pas avoir le bloc (8) Figure.1 qui soit escamotable. Dans ce cas pour effectuer le tir laser, l'Opérateur place, devant le détecteur (10) Figure.1, un matériau absorbant afin que le tir laser n'endommage pas le détecteur.

A titre d'exemple et de façon non exhaustive, le détecteur, qui est un convertisseur de photons en électrons, peut être :
- une matrice CCD,
- un centroïde,
- une matrice de photodiodes,
- etc...

## Revendications

1. Dispositif d'aide au centrage coaxial, d'une buse de confinement de gaz par rapport à l'axe optique appartenant à un faisceau laser adapté au perçage, découpage et soudage, la buse ayant pour rôle le confinement d'un gaz chargé d'assister l'interaction entre la lumière et la matière, **caractérisé en ce qu'**il comprend Figure.1:
○ un corps (8) dans lequel se trouve positionné un élément de capture d'image (10),
○ des pieds (7) qui permettent de positionner le dispositif, sur une tête de découpe ou/& de perçage ou/& de soudage, en regard de la buse de découpe ou/& de perçage ou/& de soudage ; ces pieds étant solidaires du boîtier (8);
○ un écran de visualisation de l'image Figure.3 donnée par l'élément de capture d'image (10),
○ une mire (12) indépendante de l'image du trou de la buse (5).

2. Dispositif d'aide au centrage coaxial, suivant la revendication 1, **caractérisé en ce qu'**il comprend un ensemble mécanique (13) de déplacement de l'élément de capture d'image (10), déplacement par rapport au bloc (8).

3. Dispositif d'aide au centrage coaxial, suivant les revendications 1 & 2, **caractérisé en ce que** le bloc (8) est escamotable pour laisser passer le faisceau laser.

4. Dispositif d'aide au centrage coaxial, suivant les revendications 1 & 3, **caractérisé en ce qu'**il comprend un écran (9) pouvant être fixé sur la sortie de la buse (5), écran (9) prévu pour localiser l'axe optique du faisceau laser (2).

5. Dispositif d'aide au centrage coaxial, suivant les revendications 2 & 3, **caractérisé en ce qu'**il comprend un moyen de fixation de l'écran (9) sur les pieds (7).

6. Dispositif d'aide au centrage coaxial, suivant les revendications 1 à 5, **caractérisé en ce que** l'élément de capture d'image (10) est un convertisseur de photons en électrons.

7. Dispositif d'aide au centrage coaxial, suivant les revendications 1 à 6, **caractérisé en ce que** la mire (12) est un cercle.

8. Dispositif d'aide au centrage coaxial, suivant les revendications 1 à 6, **caractérisé en ce que** la mire (12) est un quadrilatère.

9. Dispositif d'aide au centrage coaxial, suivant les revendications 7 & 8, **caractérisé en ce que** la mire (12) possède deux axes.

10. Dispositif d'aide au centrage coaxial, suivant les revendications 1 à 6, **caractérisé en ce que** la mire (12) est constituée de deux axes cartésiens.

11. Dispositif d'aide au centrage coaxial, suivant les revendications 1 à 10, **caractérisé en ce que** l'écran (9) est un morceau de ruban adhésif.
